# EUROPEAN PATENT APPLICATION

(11) **EP 2 397 791 A1**
(43) Date of publication of application: **21.12.2011**
(21) Application number: 10163540.7
(22) Date of filing: 21.05.2010
(51) Int. Cl.: F24J 2/52

(54) **Frame for mounting solar panels**

(71) Applicant: Avasco Industries N.V., 8600 Diksmuide (BE)
(72) Inventor: Van Ackere, Patrick, 8600 Diksmuide (BE)
(74) Representative: Ostyn, Frans

(57) **Abstract**

The present invention relates to a pre-assembled foldable frame for mounting a solar panel onto a surface or baseframe comprising three legs, whereby one end (4) of a second (2) and one end (4) of a third leg (3) are mounted foldably respectively on the first and second end (4) of a first leg (1), whereby said second (2) and third leg (3) are fixable to each other, characterized in that the end of said third leg (3) is fixable to said second leg (2) over at least part of the length of said second leg (2) so that the angle between said second (2) and first leg (1) is adaptable.

The present invention also relates to a method for mounting a solar panel on a surface or baseframe by means of a pre-assembled foldable frame.

The present invention further relates to the use of said frame for mounting solar panels onto a horizontal, vertical or inclined surface or structure.

## Description

### Field of the invention

The present invention relates to a pre-assembled mounting frame for installing solar panels, particularly on roofs or walls.

### Summary of the invention

Solar panels or photovaltaic panels need to be mounted optimally towards the sun. Furthermore the panels should be mounted firmly and stable. Mounting said panels is a time-consuming job, not at the least in making sure that the panels are positioned correctly.

There are several types of frames for solar panels known in the art. DE20200601983 describes a triangular chassis comprising three legs fixed together, whereby one upstanding leg is telescopic. WO02073703 describes a foldable chassis comprising three legs, one leg at the bottom, and two legs foldable into a 90° position. DE20200900751 describes a foldable chassis comprising three separate legs and a specific hinge for mounting said legs in a triangular frame. The hinge however is a rather complicated structure. FR2890725 describes a pre-assembled foldable chassis for solar panels, comprising three parts with two permanent hinges and one opening hinge to be mounted in a single fixed position triangular chassis.

The above known systems for mounting solar panels all have the disadvantage that either only one fixed position can be taken, or a telescopic leg must be used, which is a weak and extra complicated item in the construction. This one fixed position results in only one fixed angled position of the solar panel. There are no means for adapting the position to the type of surface angle or towards the sun.

It is therefor an object of the present invention to provide a simple and strong frame, yet adaptable to different positions of angle for optimal mounting of the solar panel towards the sun and taking into account the mounting surface.

Thereto, the present invention provides a pre-assembled foldable frame for mounting a solar panel onto a surface or baseframe comprising three legs, whereby one end of a second and one end of a third leg are mounted foldably respectively on the first and second end of a first leg, whereby said second and third leg are fixable to each other, characterized in that the end of said third leg is fixable to said second leg over at least part of the length of said second leg so that the angle between said second and first leg is adaptable.

The term "adaptable" means that the arrangement causes the angle between the first and second leg to be adjustable in different angles, by adapting the position of the connection between the second and third leg.

In one embodiment the third leg is fixable to said second leg by means of an adaptable connection.

In another embodiment the end of said third leg is fixed to said second leg by means of a slidable arrangement along said second leg. In a preferred embodiment the end of said third leg is permanently arranged or connected within the guiding means of said slidable arrangement.

The end of said third leg is fixable to said second leg in discrete or continuous positions.

In one embodiment the third leg is fixable to said second leg in discrete positions or holes distributed over at least part of the length of said second leg. In another embodiment the third leg is fixable in continuous positions (or in any position) to said second leg by a means applying friction between the end of said third leg and said second leg. Other means for positioning in any angle may als apply.

In one embodiment the first leg is a base leg mountable on said surface or baseframe. In another embodiment the second leg is a base leg mountable on said surface or baseframe.

In one embodiment the third leg may be telescopic. In another embodiment said third leg is provided in different lengths for providing different ranges of angles. In a preferred embodiment the angle between said second and first leg is adaptable in steps of 10°, preferably 5°. Preferably the angle between said second and first leg is 15°, 20°, 25° or 30°.

In one embodiment the second and third leg are mounted foldably on said first leg by means of permanent axes. The second and third leg are preferably fixable by means of an axis, nut and bolt or pop rivet.

In a specific embodiment the base leg comprises supports over at least part of the length of said base leg for fixing to said surface or baseframe.

In a second aspect the present invention provides a method for mounting a solar panel on a surface or baseframe by means of a pre-assembled foldable frame as described above, comprising the steps of: a) mounting the first leg to the surface or baseframe, b) unfolding the second and third leg, and c) fixing the second and third leg together in a position adapting the angle of the first and second leg to the orientation of the sun; whereby steps a) and b) can be switched.

In an alternative embodiment the present invention provides a method for mounting a solar panel on a surface or baseframe by means of a pre-assembled foldable frame as described above, comprising the steps of: a) mounting the second leg to the surface or baseframe, b) unfolding the first and third leg, and c) fixing the second and third leg together together in a position adapting the angle of the first and second leg to the orientation of the sun; whereby steps a) and b) can be switched.

In a third aspect the present invention provides the use of a frame as specified herein for mounting solar panels onto a horizontal, vertical or inclined structure.

The frame of the present invention is especially advantageous for mounting a solar panel on a flat or slightly inclined surface, such as a roof or wall. The degree of angle is adaptable to the inclinement of the roof and the optimal positioning towards the sun.

Specific embodiments of the present invention will now be described, by way of example, with reference to the accompanying figures.

### Figures

Figure 1 is a representation of a pre-assembled mounting frame of the invention in (a) an unfolded and (b) a folded position.
Figure 2 is a representation of a base profile of a pre-assembled mounting frame according to an embodiment of the invention for applying the frame to a surface.
Figure 3 is a representation of a mounting profile of a pre-assembled mounting frame according to an embodiment of the invention for applying a solar panel onto.
Figure 4 is a representation of an intermediate profile of a pre-assembled mounting frame according to three specific embodiments (a: 15°, b: 20°, c: 30°) of the invention.
Figure 5 is a representation of a pre-assembled mounting frame according to a specific embodiment of the invention.
Figure 6 is a representation of a pre-assembled mounting frame according to a specific embodiment of the invention in an angled position of 25°.
Figure 7 is a representation of a pre-assembled mounting frame according to another embodiment of the invention, whereby the adaptable arrangement is applied on the base profile.

### Detailed description of the invention

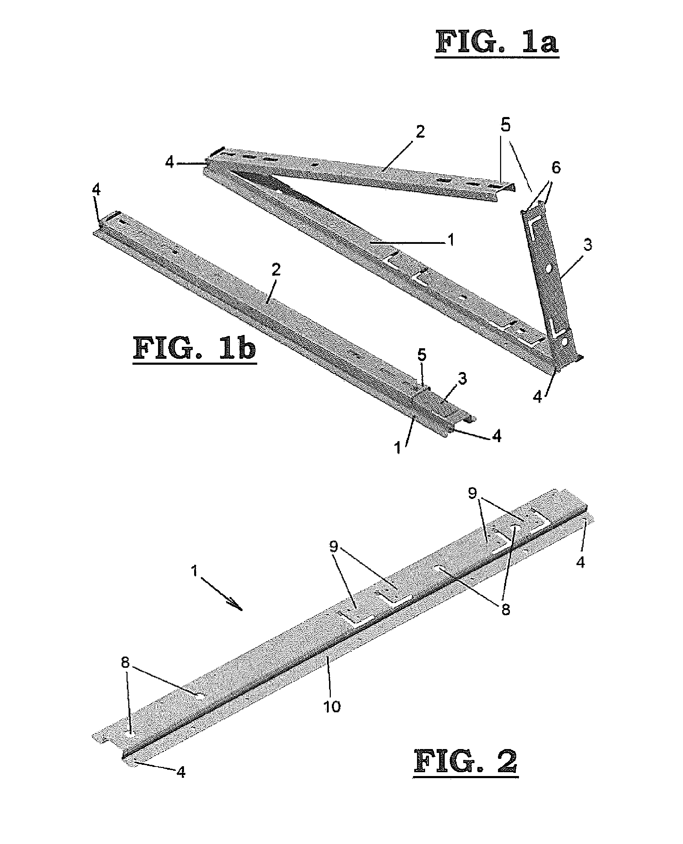

Figure 1a represents a pre-assembled mounting frame according to a first aspect of the invention. The frame comprises a base profile (1) for applying the frame to a surface, a mounting profile (2) for applying a solar panel onto and an intermediate profile (3) for regulating the angle between the base profile and the mounting profile.

The mounting profile (or "second" leg) (2) and the intermediate profile (or "third" leg) (3) are pre-assembled to the base profile (or "first" leg) by a fixation means, e.g. a bolt and nut applied through openings (4) at the ends of the profiles. Inbetween the two nuts, the bolt may be inserted in a tubular element that provides extra strength and prevents that the bolt and nut system is tightened beyond deformation of the profile. Other fixation means are pop rivets.

The other ends (5) of the mounting profile (2) and the intermediate profile (3) are connectable to each other via an adaptable arrangement.

The profiles (1, 2, 3) are dimensioned in such a way that the intermediate profile (3) can be folded onto the base profile (1), and the mounting profile (2) can be folded onto the intermediate profile (3) for easy and compact handling and transportation. In folded position, the pre-assembled frame takes the dimensions of the base profile (1) with an extra thickness of the other two profiles (2, 3) folded on top, as shown in Figure 1b.

In a preferred embodiment the profiles (1, 2, 3) are U-shaped. The dimensions of the U-profiles is such that they can be stacked one on top of the other for compact folding via the foldable arrangements of connection to each other. Hereto, the connections are such that a full compact folding is achieved. This can be achieved by a correct alignment of the openings for applying the fixation means.

The U-profiles preferably have a simple, quasi straight edge end. Holes or openings are applied in the two shorter legs of the U-shape, i.e. at the side of the U-profiles.

When mounting the frame to a surface or baseframe, the base profile (1) can first be mounted by means of screws for example, whereafter the other profiles (2, 3) are unfolded.

After unfolding, the intermediate profile (3) is connected to the mounting profile (2), for example by means of a bolt and nut applied through openings (6, 7) in the profiles.

Unfolding means first unfolding the mounting profile (2) and then unfolding the intermediate profile (3) from the base profile (1). In another embodiment, whereby the intermediate profile (3) is folded on top of the mounting profile (2), unfolding means first unfolding the intermediate profile (3) and then the mounting profile (2).

In an alternative manner, the profiles (2,3) can first be unfolded and connected to one another, and then the base profile (1) can be applied onto a surface or baseframe.

As shown in Figure 2, the base profile (1) comprises side supports (10) along the length of the profile for firmly applying the frame onto a surface or baseframe. The baseframe is then first mounted to the roof or wall structure, while the frame of the invention is mounted on the baseframe. In one embodiment the baseframe takes the shape of a rectangular frame.

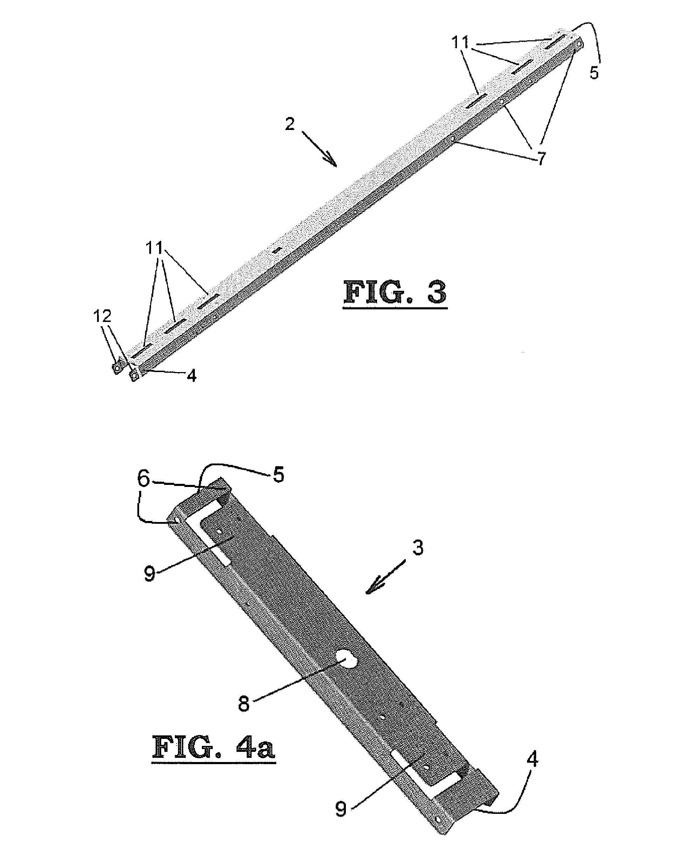

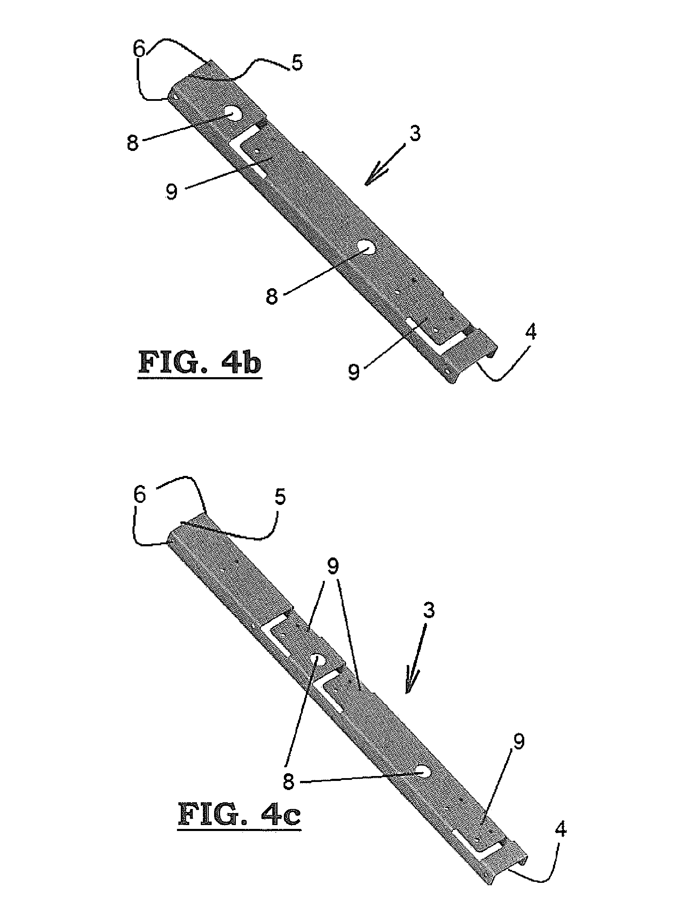

Figure 3 and 4 respectively illustrate an embodiment of a mounting profile (2) and an intermediate profile (3). Figure 3 illustrates a mounting profile (2) comprising three openings (7) for adapting the connection with the intermediate profile (3) to three different angles of 15°, 20° and 30°.

In a specific embodiment of a frame according to the invention, openings (6) are provided at the end of the intermediate profile (3). Multiple openings (7) are provided at discrete positions along at least part of the length of the mounting profile (2). Each opening corresponds to a different angled position of the mounting profile (2) and thus the solar panel mounted onto it.

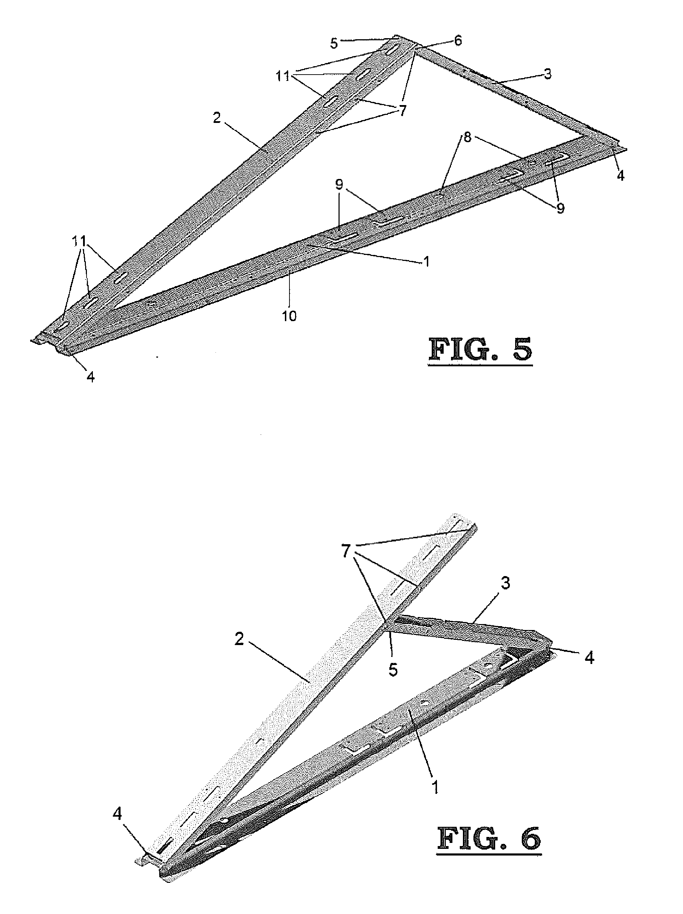

Figure 5 is a specific embodiment of a 30° angled position of the mounting frame. Figure 6 represents a pre-assembled mounting frame of the invention in a specific angled position of 25°.

Besides nuts and bolts, other fixation means can be used, such as e.g. a clicking means fastened to one leg and clickable in a receiving means of the other leg. The clicking means may even be positionable in different angles.

As shown in Figure 3, the mounting profile (2) comprises fixing means, e.g. openings (11) for fixing a solar panel onto. The mounting profile (2) further comprises elements (12) at the end (4) for mounting onto the base profile. These elements (12) are dimensioned such that the connection with the base profile (1) is provided, whereby the wider dimensions of the actual mounting profile (2) can be folded onto said base profile (1).

The base profile (1) and intermediate profile (3) further comprise one or more recesses (8) and lids (9) provided at different positions for applying ballast or other material onto.

As shown in Figures 4 a to c the intermediate profile (3) may be provided in different lengths so as to provide pre-assembled frames adapted to different ranges of angles. A longer intermediate profile may provide for a range of larger angles than a shorter intermediate profile. The choice of length of intermediate profile (3) may depend on the application, which may be for roofs, flat and/or inclined, or walls.

The profiles are preferably made by punching in a mold of a metal, such as stainless steel or aluminium.

A pre-assembled mounting frame according to a specific embodiment of the invention comprises an intermediate profile (3) arranged slidably in the mounting profile (2), i.e. the intermediate profile (3) is fixable to the mounting profile (2) over at least part of the length of the mounting profile (2), preferably towards the open end of said mounting profile (2). Thereto, the mounting profile (2) comprises guiding means for guiding the end of the intermediate prodile (3) along the mounting profile (2), hereby slidably connecting the end of the intermediate profile (3). As such, the end of the intermediate profile (3) remains positioned in the guiding means, as well in folded as in unfolded position. This makes assembly on site easier, since the profiles comprise no open or loose hanging ends. All ends are connected to each other in one way or another.

The actual connecting of the intermediate profile (3) to the mounting profile (2) can be provided by a bolt and nut system into discrete openings as previously set out.

In a slidable arrangement, where the intermediate profile (3) is slidably arranged along the mounting profile (2), unfolding means uplifting the mounting profile whereby the intermediate profile (3) is uplifted in the same movement. This is the added advantage of a slidable embodiment. Mounting is very easy and could be performed in one uplifting movement and one connecting movement, whereby the end of the intermediate profile (3) is fastened to the mounting profile (1) by means of e.g. a clicking system. A nut and bolt can be added as additional fastening means.

In a further specific embodiment for connecting the intermediate profile (3) to the mounting profile (2), a continuous fixation can be provided. Instead of providing openings at discrete distances, a fixing means based on friction e.g. can be applied so that the mounting profile (2) can be positioned continuously in any angle by the intermediate profile (3).

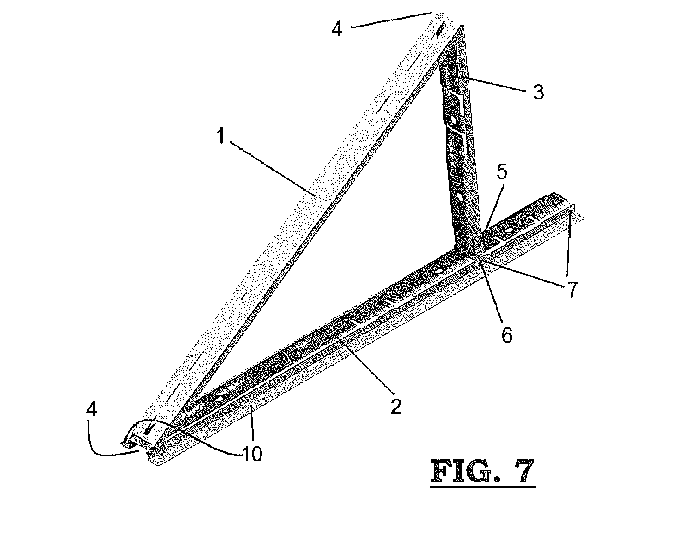

A pre-assembled mounting frame according to a second aspect of the invention, as shown in Figure 7, provides for an adaptable arrangement of the pre-assembled frame via to the surface profile.

Similarly as described above, the mounting frame comprises two legs (2 and 3) connected to a first leg (1) via ends (4). However, in this embodiment, the "first leg" (1) of the three pre-assembled legs takes the function of the mounting profile and the "second" leg (2) takes the function of the base profile. The "third" leg (3) is the intermediate profile that is connectable to the "second" leg in an adaptable arrangement. Hereto the base profile (2) comprises openings (7) at different positions for receiving the intermediate profile (3) and arranging the mounting profile (1) in different angled positions.

The profiles (1, 2, 3) are provided in such a way that the intermediate profile (3) can be folded onto the mounting profile (1), and the assembly of these two profile can be folded onto the base profile (2) for easy and compact handling and transportation. In folded position, the pre-assembled frame again takes the dimensions of the base profile (2) with an extra thickness of the other two profiles (1, 3) folded on top.

In this embodiment, the base profile (2) or "second" leg comprises side supports (10) along the length of the profile for firmly applying the frame onto the surface. When mounting on a surface or baseframe, preferably a flat surface, the base profile (2) can first be applied to the surface or baseframe by means of screws for example, whereafter the other profiles (1, 3) are unfolded.

After unfolding, the intermediate profile (3) is connected to the base profile (2) by means of a bolt and nut applied through openings (6, 7) in the profiles.

Unfolding here means uplifing the mounting profile (1), whereby the intermediate profile (3) is uplifted along with this movement.

Similarly as described above for the first aspect of the invention, the intermediate profile (3) may be arranged slidably in at least part of the length of the base profile (2). Also, both profiles (2, 3) may be connectable to each other by means of either discrete connection points (e.g. openings and nuts and bolts), or by means of a continuous fixation (e.g. based on friction).

In a slidable arrangement, where the intermediate profile (3) is slidably arranged along the base profile (2), mounting is very easy and could be performed in one uplifting movement and one connecting movement, whereby the end of the intermediate profile (3) is fastened to the base profile (2) by means of e.g. a clicking system, A nut and bolt can be added as additional fastening means.

## Claims

1. A pre-assembled foldable frame for mounting a solar panel onto a surface or baseframe comprising three legs, whereby one end (4) of a second (2) and one end (4) of a third leg (3) are mounted foldably respectively on the first and second end (4) of a first leg (1), whereby said second (2) and third leg (3) are fixable to each other, **characterized in that** the end (5) of said third leg (3) is fixable to said second leg (2) over at least part of the length of said second leg (2) so that the angle between said second (2) and first leg (1) is adaptable.

2. Frame according to claim 1, **characterized in that** the end (5) of said third leg (3) is fixable to said second leg (2) by means of an adaptable connection.

3. Frame according to claim 1 or 2, **characterized in that** the end (5) of said third leg (3) is connected to said second leg (2) by means of a slidable arrangement along at least part of the length of said second leg.

4. Frame according to claim 3, **characterized in that** the end (5) of said third leg (3) is permanently arranged or connected within the guiding means of said slidable arrangement.

5. Frame according to claim 2 to 4, **characterized in that** the end (5) of said third leg (3) is fixable to said second leg (2) in discrete or continuous positions.

6. Frame according to claim 5, **characterized in that** said third leg (3) is fixable to said second leg (2) in discrete positions or holes (7) distributed over at least part of the length of said second leg (2).

7. Frame according to claim 5, **characterized in that** said third leg (3) is fixable in continuous positions to said second leg (2) by a means applying friction between the end (5) of said third leg (3) and said second leg (2).

8. Frame according to any of claims 1 to 7, **characterized in that** said first leg (1) is a base leg mountable on said surface or baseframe.

9. Frame according to any of claims 1 to 7, **characterized in that** said second leg (2) is a base leg mountable on said surface or baseframe.

10. Frame according to any of the previous claims, **characterized in that** said third leg (3) is provided in different lengths for providing different ranges of angles.

11. Frame according to any of the previous claims, **characterized in that** the angle between said second (2) and first leg (1) is adaptable in steps of 10°, preferably 5°.

12. Frame according to any of the previous claims, **characterized in that** the angle between said second (2) and first leg (1) is 15°, 20°, 25° or 30°.

13. A method for mounting a solar panel on a surface or baseframe by means of a pre-assembled foldable frame according to any of the claims 1 to 12, comprising the steps of:
a. mounting the first leg (1) to the surface or baseframe,
b. unfolding the second (2) and third leg (3), and
c. fixing the second (2) and third leg (3) together in a position adapting the angle of the first (1) and second leg (2) to the orientation of the sun;
whereby step a and b can be switched.

14. A method for mounting a solar panel on a surface or baseframe by means of a pre-assembled foldable frame according to any of the claims 1 to 12, comprising the steps of:
a. mounting the second leg (2) to the surface,
b. unfolding the first (1) and third leg (3), and
c. fixing the second (2) and third leg (3) together in a position adapting the angle of the first (1) and second leg (2) to the orientation of the sun;
whereby step a and b can be switched.

15. Use of a frame according to claims 1 to 12 for mounting solar panels onto a horizontal, vertical or inclined surface or structure.
